# EUROPÄISCHE PATENTSCHRIFT

(11) **EP 2 675 676 B1**
(45) Veröffentlichungstag und Bekanntmachung des Hinweises auf die Patenterteilung: **09.09.2020**
(21) Anmeldenummer: 11802922.2
(22) Anmeldetag: 20.12.2011
(51) Int. Cl.: B60T 13/74, B60T 8/44, B60T 1/10

(54) **BREMSSYSTEM SOWIE VERFAHREN ZUR REGELUNG EINES DRUCKES EINES BREMSMEDIUMS IN EINEM BREMSSYSTEM**
BRAKE SYSTEM AND METHOD FOR REGULATING A PRESSURE OF A BRAKE MEDIUM IN A BRAKE SYSTEM
SYSTÈME DE FREINAGE ET PROCÉDÉ DE RÉGULATION D'UNE PRESSION D'UN FLUIDE DE FREIN DANS UN SYSTÈME DE FREINAGE

(30) Priorität: 15.02.2011 DE 102011004140
(43) Veröffentlichungstag der Anmeldung: 25.12.2013
(73) Patentinhaber: Robert Bosch GmbH, 70442 Stuttgart (DE)
(72) Erfinder: MAYER, Jochen, 70195 Stuttgart-Botnang (DE)
(86) Internationale Anmeldenummer: PCT/EP2011/073378
(87) Internationale Veröffentlichungsnummer: WO 2012/110145

(56) Entgegenhaltungen:
- DE-A1-102007 030 441
- DE-A1-102008 000 628
- DE-A1-102008 012 874

## Beschreibung

### Stand der Technik

Die Erfindung betrifft ein Bremssystem, insbesondere für ein Kraftfahrzeug sowie ein Verfahren zur Regelung eines Druckes eines Bremsmediums in einem Bremssystem.

Bremssysteme werden beispielsweise im Bereich von Kraftfahrzeugen eingesetzt, um ein Kraftfahrzeug kontrolliert zu verlangsamen. Hierzu wird üblicherweise eine Bremspedalkraft in einen Bremsdruck umgewandelt, die mittels eines Bremsmediums an Radzylinder des Kraftfahrzeugs zu deren Betätigung übertragen wird.

Aus der DE 10 2008 012 874 A1 ist eine Fahrzeugbremsanlage bekannt geworden. Die Fahrzeugbremsanlage umfasst dabei hydraulisch betätigbare Radbremszylinder sowie ein Druckversorgungssystem zur Beaufschlagung der Radbremsen mit einem Bremsdruck. Betätigt ein Fahrer des Kraftfahrzeugs die Fahrzeugbremsanlage, wird die Stärke des Fahrerbremswunsches ermittelt. In Abhängigkeit des ermittelten Fahrerbremswunsches wird das Raumvolumen einer expandierenden Vorrichtung verändert. Das Druckversorgungssystem koppelt dabei ein Bremspedal zur Übermittlung des Fahrerwunsches und einen Bremskraftverstärker mit Radbremszylindern des Fahrzeugs. Wird das Bremspedal betätigt, wird mittelbar ein Hauptbremszylinder mit Kolben des Druckversorgungssystems betätigt, welcher über zwei Bremskreise mit den Radbremszylindern verbunden ist. Weiterhin umfasst der Bremskraftverstärker einen Elektromotor mit dem eine unterstützende, also zusätzliche Kraft, mittelbar auf den Kolben des Hauptbremszylinders gegeben wird. Da der Kolben des Hauptbremszylinders eine definierte Fläche aufweist und auch in definierter Weise mit dem Kolben des Hauptbremszylinders gekoppelt ist, kann aus der Winkelstellung einer Antriebswelle des Elektromotors auf die Stellung des Kolbens des Hauptbremszylinders geschlossen werden. Anhand dieser Stellung kann dann das verdrängte Volumen von Bremsmedium aus dem Hauptbremszylinder ermittelt werden.

Die DE 10 2007 030 441 A1 beschreibt ein Bremssystem zum regenerativen Bremsen eines Hybridfahrzeugs mit einem Generatorbremssystem, das dazu ausgelegt ist, durch Ansteuerung eines Generators eine Bremswirkung zu erzielen, und einem Hydraulikbremssystem, welches eine Simulatoreinheit aufweist, welche dazu eingerichtet ist, Hydraulikfluid aus dem Hydraulikbremssystem zu entnehmen und in das Hydraulikbremssystem zurückzuführen, um einem Fahrer am Bremspedal ein Pedalgefühl bereitzustellen.

### Offenbarung der Erfindung

Erfindungsgemäß ist ein regeneratives Bremssystem gemäß Anspruch 1 und ein Verfahren zur Regelung eines Druckes eines Bremsmediums dem erfindungsgemäßen Bremssystem gemäß Anspruch 7 vorgesehen. Erfindungsgemäß ist außerdem eine Verwendung des erfindungsgemäßen Bremssystems gemäß Anspruch 10 vorgesehen.

Ein Bremssystem, insbesondere für ein Kraftfahrzeug, umfasst eine Bremskrafteinrichtung mit einem Bremskraftverstärker zur Verstärkung einer Bremskraft und einer Bremsdruckbereitstellungseinrichtung zur Bereitstellung von Bremsdruck mittels eines Bremsmediums,
eine Bremseinrichtung, die mittels der Bremsdruckbereitstellungseinrichtung mit Druck durch das Bremsmedium beaufschlagbar ist, sowie
zumindest einen Sensor, welcher ausgebildet ist, eine Wegstreckendifferenz eines Verschiebemittels für die Verschiebung von Volumen des Bremsmediums der Bremskrafteinrichtung zu sensieren und wobei
die Bremskrafteinrichtung ausgebildet ist, das zu verschiebende Volumen des Bremsmediums anhand der sensierten Wegstreckendifferenz zu ermitteln.

Dabei kann der Sensor entweder direkt oder auch lediglich indirekt die Wegstreckendifferenz sensieren, beispielsweise in dem dieser die Zeit und Geschwindigkeit für eine Verschiebung des Verschiebemittels sensiert. Aus diesen kann dann die Wegstreckendifferenz und weiter das zu verschiebende Volumen ermittelt werden.

Ein Verfahren zur Regelung eines Druckes eines Bremsmediums in einem Bremssystem, insbesondere in einem Kraftfahrzeug, umfassend die Schritte Vorgeben einer Bremskraft,
Verstärken der Bremskraft,
Bereitstellen der verstärkten Bremskraft mittels Bremsdruck in einer Bremseinrichtung durch eine Volumenverschiebung eines Bremsmediums, wobei die Volumenverschiebung des Bremsmediums mittels einer Wegstreckendifferenz eines Verschiebemittels sensiert wird.

Weiterhin ist eine Verwendung des beschriebenen Bremssystems in einem Kraftfahrzeug, insbesondere in einem PKW vorgesehen.

### Vorteile der Erfindung

Das erfindungsgemäße Bremssystem sowie das erfindungsgemäße Verfahren weisen den Vorteil auf, dass auf einfache und zuverlässige Weise das zu verschiebende Volumen an Bremsmedium für einen gewünschten Bremsdruck indirekt anhand einer Wegstreckendifferenz des Verschiebemittels bestimmt werden kann.
Weitere Merkmale und vorteilhafte Weiterbildungen der Erfindung sind in den Unteransprüchen beschrieben.

Gemäß einer bevorzugten Weiterbildung der Erfindung ist der zumindest eine Sensor zur Detektion eines Stellwinkels ausgebildet. Auf diese Weise kann beispielsweise kostengünstig der Sensor mit der entsprechenden Winkelstellvorrichtung, insbesondere in einem Motor oder dergleichen, zusammen hergestellt werden.

Gemäß einer weiteren bevorzugten Weiterbildung der Erfindung ist zumindest ein weiterer Sensor angeordnet, der als Wegstreckensensor oder als Differenzwegsensor ausgebildet ist. Der erzielte Vorteil dabei ist, dass damit die Zuverlässigkeit der Bestimmung des zu verschiebenden Bremsmediumvolumens noch weiter erhöht, da der weitere Sensor zum einen zur Überprüfung der sensierten Werte des zumindest einen Sensors dienen kann, zum anderen können auf unterschiedliche Weise das zu verschiebende Volumen des Bremsmediums bestimmt werden und Toleranzen, beispielsweise durch Mittelwertbildung, minimiert werden.

Gemäß einer weiteren bevorzugten Weiterbildung der Erfindung ist die Bremskrafteinrichtung derart ausgebildet, um eine Verformung der Einrichtungen des Bremssystems auf Grund von verändertem Druck des Bremsmediums zu kompensieren. Einrichtungen sind hierbei insbesondere die Bremsdruckbereitstellungseinrichtung und die Bremseinrichtung. Auf diese Weise kann die Zuverlässigkeit und Genauigkeit des Bremssystems weiter gesteigert werden, da Verformungen der Einrichtungen, beispielsweise Gummidichtungen oder dergleichen, bei der indirekten Ermittlung des zu verschiebenden Volumens berücksichtigt werden. Der gewünschte Bremsdruck kann auf diese Weise noch genauer bereitgestellt werden, sodass der Fahrer eines Kraftfahrzeugs einen wohl dosierten Bremsvorgang durchführen kann.

Gemäß einer bevorzugten Weiterbildung der Erfindung umfasst die Bremskrafteinrichtung, insbesondere die Bremsdruckbereitstellungseinrichtung, ein elastisches Element, welches bei einer Druckbeaufschlagung verformbar ist. Mittels des verformbaren Elementes, beispielsweise in Form einer Reaktions- oder Elastizitätsscheibe kann die Regelbarkeit des Bremssystems entscheidend verbessert werden.

Erfindungsgemäß ist das Verschiebemittel als Kolben und die Bremsdruckbereitstellungseinrichtung als Zylinder ausgebildet und die Bremskrafteinrichtung ist ausgebildet anhand der Querschnittsfläche des Kolbens multipliziert mit der Wegstreckendifferenz der Verschiebung des Kolbens das zu verschiebende Volumen zu ermitteln. Der damit erzielte Vorteil ist, dass damit ein einfaches und kostengünstiges Verschiebemittel und eine entsprechende Bremsdruckbereitstellungseinrichtung zur Verfügung gestellt werden. Gleichzeitig kann das zu verschiebende Volumen einfach und genau bestimmt werden, da die Fläche des Kolbens genau definiert ist und eine Wegstreckendifferenz mittels bekannter Verfahren zuverlässig bestimmt werden kann.

Erfindungsgemäß ist ein Ausgleichsmittel angeordnet zum Zuführen und/oder Abführen von Bremsmediumvolumen der Bremseinrichtung. Auf diese Weise kann eine Elastizität eines Bremssystems einfach und zuverlässig angepasst werden und insbesondere Toleranzen im Bremssystem ausgeglichen werden.

Erfindungsgemäß ist das Ausgleichsmittel mittels eines Motors antreibbar. Damit kann auf einfache Weise das Ausgleichsmittel gesteuert werden und kontrolliert Bremsmediumvolumen zugeführt oder abgeführt werden. Bei Betätigung eines Bremspedals, welches über einen Stößel mit einer Eingangsstange des Bremskraftverstärkers zur Übertragung einer gewünschten Bremskraft verbunden ist, ist ein dadurch aufgebauter Bremsmedium-Druck in der Bremseinrichtung durch das Ausgleichsmittel mittels einer Volumenverschiebung von Bremsmedium in das Ausgleichsmittel abbaubar, so dass an Rädern des Kraftfahrzeuges eine generatorische Rückgewinnung von Bremskraft durchführbar ist.

Gemäß einer weiteren bevorzugten Weiterbildung der Erfindung ist das Ausgleichsmittel derart ausgebildet, sodass ein Volumen an zuführbarem und/oder abführbarem Bremsmedium durch das Ausgleichsmittel kleiner ist als ein Volumen an verschobenem Bremsmedium durch die Bremsdruckbereitstellungseinrichtung.
Der Vorteil dabei ist, dass vermieden wird, dass durch das Ausgleichsmittel zu viel Volumen des Bremsmediums aufgenommen wird und so ein Bremsdruck zu stark abfällt.

Gemäß einer vorteilhaften Weiterbildung des Verfahrens wird bei der Bereitstellung des Bremsdruckes mittels der Volumenverschiebung eine Verformung eines elastischen Elementes auf Grund eines sich verändernden Druckes kompensiert. Auf diese Weise ist eine genauere und zuverlässigere Bereitstellung von Bremsdruck mittels des Bremsmediums möglich.

Gemäß einer weiteren zweckmäßigen Weiterbildung wird Bremsmediumvolumen der Bremseinrichtung durch ein Ausgleichmittel zu- und/oder abgeführt. Auf diese Weise kann eine Elastizität des Bremssystems einfach und zuverlässig angepasst werden und insbesondere Toleranzen des Bremssystems ausgeglichen werden.

Gemäß einer weiteren zweckmäßigen Weiterbildung ist das zugeführte und/oder abgeführte Bremsmediumvolumen durch das Ausgleichmittel kleiner oder gleich dem bereitgestellten Bremsmediumvolumen durch die Bremseinrichtung. Der Vorteil dabei ist, dass vermieden wird, dass durch das Ausgleichsmittel zu viel Volumen des Bremsmediums aufgenommen wird und so ein Bremsdruck zu stark abfällt.

### Kurze Beschreibung der Zeichnungen

Ausführungsbeispiele der Erfindung sind in der Zeichnung dargestellt und in der nachfolgenden Beschreibung näher erläutert.

Es zeigt:

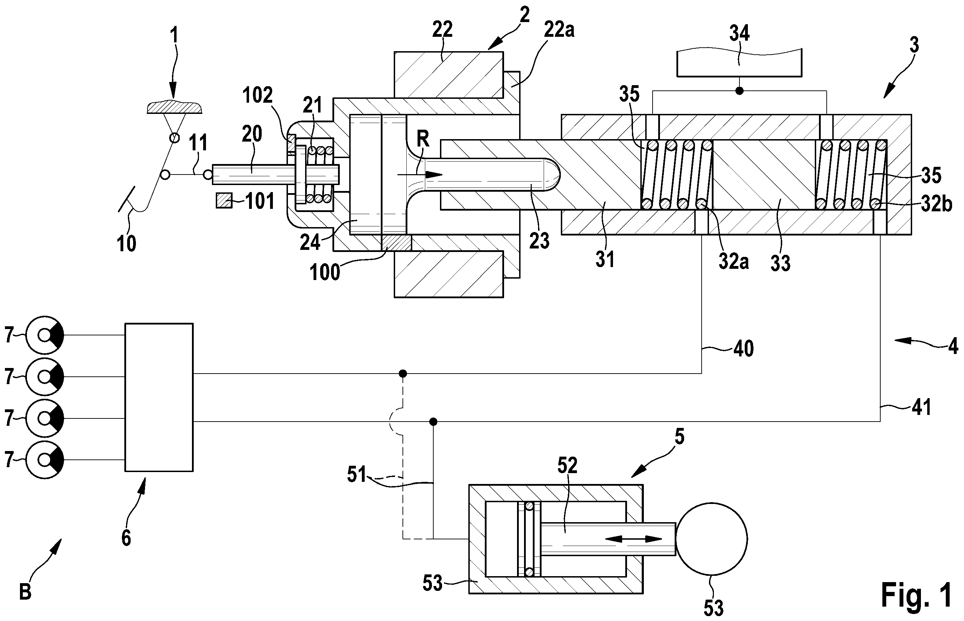

- Fig. 1: ein Bremssystem gemäß einer Ausführungsform der vorliegenden Erfindung.

### Ausführungsformen der Erfindung

In den Figuren bezeichnen gleiche Bezugszeichen dieselben bzw. funktionsgleiche Elemente, soweit nicht anders beschrieben.

Fig. 1 zeigt ein Bremssystem gemäß einer Ausführungsform der vorliegenden Erfindung.

In Fig. 1 ist ein Bremssystem B gezeigt. Das Bremssystem B umfasst eine Pedaleinheit 1 mit einem Bremspedal 10, welches durch einen Fahrer eines Kraftfahrzeugs zum Bremsen betätigbar ist. Das Bremspedal 10 ist in üblicher Weise über einen Stößel 11 mit einer Eingangsstange 20 eines Bremskraftverstärkers 2 zur Übertragung der gewünschten Bremskraft verbunden. Die Eingangsstange 20 stützt sich dabei über Federn 21 im Inneren des Bremskraftverstärkers 2, genauer an Vorsprüngen eines Mitnehmers 22a ab. Die Eingangsstange 20 drückt bei entsprechend starker Betätigung auf ein elastisches Element in Form einer Reaktionsscheibe 24. Die elastische Reaktionsscheibe 24 ist weiter mit einem Kolben 23 zur teilweisen Kraftübertragung formschlüssig verbunden und überträgt mittelbar Kräfte des Bremspedals 10 auf eine Bremsdruckbereitstellungseinrichtung in Form eines Tandem-Bremszylinders 3, indem ein Teil des Kolbens 23 des Bremskraftverstärkers 2 formschlüssig in einen Teil eines Kolbens 31 des Tandem-Bremszylinders 31 eingreift. Auf der Außenseite des Bremskraftverstärkers 2 ist ein Motor 22 zum Verschieben des Mitnehmers 22a des Bremskraftverstärkers 2 angeordnet, der beispielsweise über ein Gewinde oder Ähnliches eine zusätzliche Kraft auf den Kolben 23 des Bremskraftverstärkers 2 zur Verstärkung der Bremskraft bereitstellt.

Der Tandem-Bremszylinder 3 ist in üblicher Weise aufgebaut: ein zweiter Kolben 33 stützt sich einerseits über Feder 32a am Kolben 31, andererseits mittels der Feder 32b im Inneren des Gehäuses des Tandem-Bremszylinders 3 ab, sodass zwei separate Kammern entstehen. Jeder der Kammern 35 ist mit einem gemeinsamen Reservoir 34 zur Bereitstellung von Bremsmedium verbunden. Jeweils eine Bremsleitung 40, 41 ist mit jeweils einer Kammer 35 verbunden. Die Bremsleitungen 40, 41 einer Bremseinrichtung 4 sind stromabwärts weiter mit einer ABS/ESP-Einrichtung 6 verbunden. Diese ist wiederum mit Radbremszylindern 7 verbunden. Bei Vorliegen eines bestimmten Bremsdruckes überprüft die ABS-/ESP-Einrichtung 6, ob ggf. ein Rad durch Betätigung des entsprechenden Radbremszylinders 7 blockiert. Ist dies der Fall vermindert die ABS-/ESP-Einrichtung den Bremsdruck an dem entsprechenden Radbremszylinder, bis das entsprechende Rad nicht mehr blockiert. Weiterhin überprüft die ABS-ESP-Einrichtung 6, ob ggf. ein Durchdrehen eines oder mehrerer Räder vorliegt. Ist dies der Fall, beaufschlagt die ABS-/ESP-Einrichtung 6 den entsprechenden Radbremszylinder mit einem Bremsdruck, sodass das entsprechende Rad abgebremst wird und nicht mehr durchdreht.

Weiter ist ein Ausgleichsmittel 5 in Form eines Ausgleichszylinders 53 mit Kolben 52 angeordnet. Der Kolben 52 ist dabei mittels eines Motors 53 antreibbar. Der mittels des Kolbens 52 in seinem Volumen veränderbare Raum des Ausgleichszylinders 53 zur Aufnahme von Bremsmedium ist über Leitungen 51 mit den Bremsleitungen 40,41 verbunden. Die Leitungen 51 sind dabei an den Bremsleitungen 40,41 im Bereich zwischen der ABS-/ESP-Einrichtung 6 und den Kammern 35 des Tandem-Bremszylinders angeordnet.

Ein derartiges Bremssystem wird beispielsweise in regenerativen Bremssystemen verwendet. Bei einer Betätigung des Bremspedals 10 wird Druck in der Bremseinrichtung durch das Ausgleichsmittel 5 mittels einer Volumenverschiebung von Bremsmedium abgebaut, um eine Rückgewinnung der Bremskraft, beispielsweise mittels Elektromotoren an den Rädern, die als Generator die jeweiligen Räder abbremsen, zu ermöglichen.

Um das für das Bremssystem charakteristische, eingeprägte Volumen V_{HZ} zu ermitteln kann ein Wegsensor 100 angeordnet werden, der eine Verschiebung des Mitnehmers 22a misst. Eine solche Messung kann beispielsweise auch indirekt über einen Stellwinkel der Antriebswelle des Motors oder dergleichen erfolgen. Anhand der ermittelten Wegstrecke S_{B} der Verschiebung durch den Wegsensor 100 und der Querschnittsfläche A_{HZ} des Kolbens 31, der mit dem Bremsmedium beaufschlagbar ist, kann das eingeprägte Volumen V_{HZ} berechnet werden: V_{HZ} = A_{HZ} ^{∗} S_{B}

Eine weitere Möglichkeit besteht darin, einen Stangenwegsensor 101 anzuordnen, der eine Verschiebung der Eingangsstange 20 misst und einen Differenzwegsensor 102, welcher die Differenz S_{D} zwischen der Wegstrecke S_{B} des Mitnehmers 22a und der Verschiebung S_{F} der Eingangsstange 20 misst. Das verschobene Volumen V_{HZ} berechnet sich dann nach: V_{HZ} = A_{HZ} ^{∗} (S_{F}-S_{D}). Um ein elastisches Element, in Figur 1 die Reaktionsscheibe 24, bei der Berechnung des verschobenen Volumens zu berücksichtigen, kann eine Federkonstante C für die Reaktionsscheibe angenommen werden. Das verschobene Volumen V_{HZ} berechnet sich dann nach der Formel:V_{Hz} = A_{HZ} ^{∗} (S_{B}-F_{B/}C). Das verschobene Volumen wird also um die Deformation der Reaktionsscheibe 24 bei Beaufschlagung dieser mit Druck entsprechend vermindert. Um zu vermeiden, dass zu viel Volumen von Bremsmedium aus dem Bremssystem durch das Ausgleichsmittel entnommen wird, ist das jeweils aufnehmbare Volumen V_{A} des Ausgleichsmittels kleiner oder gleich dem jeweiligen verschobenen Volumen: V_{HZ} <= V_{A}. Damit wird insbesondere vermieden, dass Luft in das Bremssystem gelangt.

Obwohl die vorliegende Erfindung vorstehend anhand bevorzugter Ausführungsbeispiele beschrieben wurde, ist sie nicht darauf beschränkt, sondern auf vielfältige Weise modifizierbar.

Der Bremskraftverstärker kann dabei in Form eines elektromechanischen, elektrohydraulischen oder elektropneumatischen Bremskraftverstärkers ausgebildet sein.

## Patentansprüche

1. Regeneratives Bremssystem (B), insbesondere für ein Kraftfahrzeug, umfassend:
eine Bremskrafteinrichtung (2,3) mit einem Bremskraftverstärker (2) zur Verstärkung einer Bremskraft und einer als Zylinder ausgebildeten Bremsdruckbereitstellungseinrichtung (3) zur Bereitstellung von Bremsdruck mittels eines Bremsmediums,
eine Bremseinrichtung (4), die mittels der Bremsdruckbereitstellungseinrichtung (3) mit Druck durch das Bremsmedium beaufschlagbar ist,
zumindest einen Sensor (100), welcher ausgebildet ist, eine Wegstreckendifferenz eines als Kolben ausgebildeten Verschiebemittels (23, 31) für die Verschiebung von Volumen des Bremsmediums der Bremskrafteinrichtung (2,3) zu sensieren, wobei die Bremskrafteinrichtung (2, 3) ausgebildet ist, das zu verschiebende Volumen des Bremsmediums anhand der Querschnittsfläche des Kolbens (31) multipliziert mit der sensierten Wegstreckendifferenz der Verschiebung des Kolbens (31) zu ermitteln,
ein mittels eines Motors (53) antreibbares Ausgleichsmittel (5), welches angeordnet ist zum Zuführen und/oder Abführen von Bremsmediumvolumen der Bremseinrichtung (2, 3),wobei bei Betätigung eines Bremspedals (10), welches über einen-Stößel (11) mit einer Eingangsstange (20) des Bremskraftverstärkers (2) zur Übertragung einer gewünschten Bremskraft verbunden ist, ein dadurch aufgebauter Bremsmedium-Druck in der Bremseinrichtung (4) durch das Ausgleichsmittel (5) mittels einer Volumenverschiebung von Bremsmedium in das Ausgleichsmittel (5) abbaubar ist, so dass an Rädern des Kraftfahrzeuges eine generatorische Rückgewinnung von Bremskraft durchführbar ist.

2. Bremssystem gemäß Anspruch 1, wobei der zumindest eine Sensor (100) zur Detektion eines Stellwinkels ausgebildet ist.

3. Bremssystem gemäß Anspruch 1 oder 2, wobei zumindest ein weiterer Sensor (101,102) angeordnet ist, der als Wegstreckensensor (101) oder als Differenzwegsensor (102) ausgebildet ist.

4. Bremssystem gemäß einem der Ansprüche 1-3, wobei die Bremskrafteinrichtung (2,3) derart ausgebildet ist, um eine Verformung der Einrichtungen des Bremssystems (B) auf Grund von verändertem Druck des Bremsmediums zu kompensieren.

5. Bremssystem gemäß einem der Ansprüche 1-4, wobei die Bremskrafteinrichtung (2,3), insbesondere die Bremsdruckbereitstellungseinrichtung (3), ein elastisches Element (24) umfasst, welches bei einer Druckbeaufschlagung verformbar ist.

6. Bremssystem gemäß einem der Ansprüche 1-5, wobei das Ausgleichsmittel (5) derart ausgebildet ist, sodass ein Volumen an zuführbarem und/oder abführbarem Bremsmedium durch das Ausgleichsmittel (5) kleiner ist als ein Volumen an verschiebbarem Bremsmedium durch die Bremsdruckbereitstellungseinrichtung (3).

7. Verfahren zur Regelung eines Druckes eines Bremsmediums in einem Bremssystem gemäß einem der Ansprüche 1-6, insbesondere in einem Kraftfahrzeug, umfassend die Schritte:
Vorgeben einer Bremskraft durch Betätigung des Bremspedals (10),
Verstärken der Bremskraft durch den Bremskraftverstärker (2),
Bereitstellen der verstärkten Bremskraft mittels Bremsdruck in der Bremseinrichtung (4) durch eine Volumenverschiebung des Bremsmediums, indem das Volumen an Bremsmedium der Bremseinrichtung (4) durch das Ausgleichmittel (5) zu- und/oder abgeführt wird
Sensieren einer Wegstreckendifferenz des als Kolben (31) ausgebildeten Verschiebemittels (23, 31) für die Volumenverschiebung des Bremsmediums der Bremskrafteinrichtung (2, 3)
Ermitteln des zu verschiebenden Volumens des Bremsmediums anhand der Querschnittsfläche des Kolbens (31) multipliziert mit der sensierten Wegstreckendifferenz der Verschiebung des Kolbens (31), und
Abbauen von durch Betätigung des Bremspedals (4) aufgebautem Bremsmedium-Druck in der Bremseinrichtung (4) durch das Ausgleichsmittel (5) mittels einer Volumenverschiebung von Bremsmedium in das Ausgleichsmittel (5), so dass Bremskraft generatorisch an Rädern des Kraftfahrzeuges zurückgewonnen wird.

8. Verfahren gemäß Anspruch 7, wobei bei der Bereitstellung des Bremsdruckes mittels der Volumenverschiebung eine Verformung eines elastischen Elementes (24) auf Grund eines sich verändernden Druckes kompensiert wird.

9. Verfahren gemäß Anspruch 7 oder 8, wobei das zugeführte und/oder abgeführte Bremsmediumvolumen durch das Ausgleichmittel (5) kleiner oder gleich dem bereitgestellten Bremsmediumvolumen durch die Bremskrafteinrichtung (2,3) entspricht.

10. Verwendung eines Bremssystems (B) gemäß einem der Ansprüche 1-6 in einem Kraftfahrzeug, insbesondere in einem PKW.

## Claims

1. Regenerative brake system (B), in particular for a motor vehicle, comprising:
a brake force device (2, 3) with a brake booster (2) for boosting a brake force, and with a brake pressure provision device (3) which is configured as a cylinder for the provision of brake pressure by means of a brake medium,
a brake device (4) which can be loaded with pressure by way of the brake medium by means of the brake pressure provision device (3),
at least one sensor (100) which is configured to sense a distance difference of a displacement means (23, 31) which is configured as a piston for the displacement of volume of the brake medium of the brake force device (2, 3), the brake force device (2, 3) being configured to determine the volume to be displaced of the brake medium on the basis of the cross-sectional area of the piston (31) multiplied by the sensed distance difference of the displacement of the piston (31), and
a compensation means (5) which can be driven by means of a motor (53) and is arranged for feeding in and/or discharging brake medium volume of the brake device (2, 3), it being possible, in the case of actuation of a brake pedal (10) which is connected via a tappet (11) to an input rod (20) of the brake booster (2) for the transmission of a desired brake force, for a brake medium pressure which is built up as a result to be dissipated in the brake device (4) by way of the compensation means (5) by means of a volume displacement of brake medium into the compensation means (5), with the result that a regenerative recuperation of brake force can be carried out at wheels of the motor vehicle.

2. Brake system according to Claim 1, the at least one sensor (100) being configured for the detection of an actuating angle.

3. Brake system according to Claim 1 or 2, at least one further sensor (101, 102) being arranged which is configured as a distance sensor (101) or as a differential movement sensor (102).

4. Brake system according to one of Claims 1 to 3, the brake force device (2, 3) being configured so as to compensate for a deformation of the devices of the brake system (B) on the basis of changed pressure of the brake medium.

5. Brake system according to one of Claims 1 to 4, the brake force device (2, 3), in particular the brake pressure provision device (3), comprising an elastic element (24) which can be deformed in the case of pressure loading.

6. Brake system according to one of Claims 1 to 5, the compensation means (5) being configured such that a volume of brake medium which can be fed in and/or discharged by way of the compensation means (5) being smaller than a volume of displaceable brake medium by way of the brake pressure provision device (3).

7. Method for the regulation of a pressure of a brake medium in a brake system according to one of Claims 1 to 6, in particular in a motor vehicle, comprising the steps:
specifying of a brake force by way of actuation of the brake pedal (10),
boosting of the brake force by way of the brake booster (2),
providing of the boosted brake force by means of brake pressure in the brake device (4) by way of a volume displacement of the brake medium, by the volume of brake medium of the brake device (4) being fed in and/or discharged by way of the compensation means (5),
sensing of a distance difference of the displacement means (23, 31) which is configured as a piston (31) for the volume displacement of the brake medium of the brake force device (2, 3),
determining of the volume to be displaced of the brake medium on the basis of the cross-sectional area of the piston (31) multiplied by the sensed distance difference of the displacement of the piston (31), and
dissipating of brake medium which is built up by way of actuation of the brake pedal (4) in the brake device (4) by way of the compensation means (5) by means of a volume displacement of brake medium into the compensation means (5), with the result that brake force is recuperated in a regenerative manner at wheels of the motor vehicle.

8. Method according to Claim 7, a deformation of an elastic element (24) on account of a changing pressure being compensated for in the case of the provision of the brake pressure by means of the volume displacement.

9. Method according to Claim 7 or 8, the brake medium volume which is fed in and/or discharged by way of the compensation means (5) corresponding so as to be less than or equal to the provided brake medium volume by way of the brake force device (2, 3).

10. Use of a brake system (B) according to one of Claims 1 to 6 in a motor vehicle, in particular in a passenger car.

## Revendications

1. Système de freinage régénératif (B), en particulier pour un véhicule automobile, comprenant :
un dispositif à force de freinage (2, 3) avec un servofrein (2) pour amplifier une force de freinage et un dispositif de fourniture de pression de freinage (3) réalisé sous forme de cylindre pour fournir une pression de freinage au moyen d'un fluide de frein,
un dispositif de freinage (4) qui peut être sollicité en pression au moyen du dispositif de fourniture de pression de freinage (3) avec le fluide de frein,
au moins un capteur (100) qui est réalisé pour détecter une différence de distance de course d'un moyen de déplacement (23, 31) réalisé sous forme de piston pour le déplacement du volume du fluide de frein du dispositif à force de freinage (2, 3), le dispositif à force de freinage (2, 3) étant réalisé pour déterminer le volume à déplacer du fluide de frein à l'aide de la surface en section transversale du piston (31) multipliée par la différence de distance de course détectée du déplacement du piston (31),
un moyen de compensation (5) pouvant être entraîné par un moteur (53), qui est disposé de manière à acheminer et/ou évacuer des volumes de fluide de frein du dispositif de freinage (2, 3), où, lors de l'actionnement d'une pédale de frein (10) qui est connectée par le biais d'un poussoir (11) à une tige d'entrée (20) du servofrein (2) pour le transfert d'une force de freinage souhaitée, une pression de fluide de frein ainsi augmentée peut être réduite dans le dispositif de freinage (4) par le moyen de compensation (5) au moyen d'un déplacement de volume du fluide de frein dans le moyen de compensation (5), de telle sorte qu'une récupération génératrice de la force de freinage puisse être effectuée au niveau des roues du véhicule automobile.

2. Système de freinage selon la revendication 1, dans lequel l'au moins un capteur (100) est réalisé pour la détection d'un angle de réglage.

3. Système de freinage selon la revendication 1 ou 2, dans lequel au moins un capteur supplémentaire (101, 102) est prévu, lequel est réalisé en tant que capteur de distance de course (101) ou en tant que capteur de différence de course (102).

4. Système de freinage selon l'une quelconque des revendications 1 à 3, dans lequel le dispositif à force de freinage (2, 3) est réalisé de manière à compenser une déformation des dispositifs du système de freinage (B) sur la base de la variation de pression du fluide de frein.

5. Système de freinage selon l'une quelconque des revendications 1 à 4, dans lequel le dispositif à force de freinage (2, 3), en particulier le dispositif de fourniture de pression de freinage (3), comprend un élément élastique (24) qui peut être déformé dans le cas d'une sollicitation en pression.

6. Système de freinage selon l'une quelconque des revendications 1 à 5, dans lequel le moyen de compensation (5) est réalisé de telle sorte qu'un volume de fluide de frein pouvant être acheminé et/ou pouvant être évacué par le moyen de compensation (5) soit inférieur à un volume de fluide de frein pouvant être déplacé par le dispositif de fourniture de pression de freinage (3) .

7. Procédé de régulation d'une pression d'un fluide de frein dans un système de freinage selon l'une quelconque des revendications 1 à 6, en particulier dans un véhicule automobile, comprenant les étapes suivantes :
prescription d'une force de freinage par actionnement de la pédale de frein (10),
amplification de la force de freinage par le servofrein (2),
fourniture de la force de freinage amplifiée au moyen de la pression de freinage dans le dispositif de freinage (4) par un déplacement de volume du fluide de frein, par le fait que le volume de fluide de frein est acheminé au dispositif de freinage (4) et/ou évacué de celui-ci par le moyen de compensation (5),
détection d'une différence de distance de course du moyen de déplacement (23, 31) réalisé en tant que piston (31) pour le déplacement de volume du fluide de frein du dispositif à force de freinage (2, 3),
détermination du volume à déplacer du fluide de frein à l'aide de la surface en section transversale du piston (31) multipliée par la différence de distance de course détectée du déplacement du piston (31), et
diminution de la pression de fluide de frein produite par l'actionnement de la pédale de frein (4) dans le dispositif de freinage (4) par le moyen de compensation (5) au moyen d'un déplacement de volume du fluide de frein dans le moyen de compensation (5), de telle sorte que la force de freinage soit récupérée par voie génératrice au niveau des roues du véhicule automobile.

8. Procédé selon la revendication 7, dans lequel, lors de la fourniture de la pression de freinage au moyen du déplacement de volume, une déformation d'un élément élastique (24) est compensée sur la base d'une variation de pression.

9. Procédé selon la revendication 7 ou 8, dans lequel le volume de fluide de frein acheminé et/ou évacué par le moyen de compensation (5) est inférieur ou égal au volume de fluide de frein fourni par le dispositif à force de freinage (2, 3).

10. Utilisation d'un système de freinage (B) selon l'une quelconque des revendications 1 à 6 dans un véhicule automobile, en particulier dans un véhicule léger.
